# EUROPEAN PATENT SPECIFICATION

(11) **EP 1 704 487 B1**
(45) Date of publication and mention of the grant of the patent: **19.09.2007**
(21) Application number: 05797447.9
(22) Date of filing: 28.07.2005
(51) Int. Cl.: G06F 13/28, G06F 13/362

(54) **DMAC ISSUE MECHANISM VIA STREAMING ID METHOD**
DMAC-AUSGABEMECHANISMUS ÜBER EIN STEAMING-ID-VERFAHREN
MECANISME D'EMISSION DMAC VIA UN PROCEDE ID EN CONTINU

(30) Priority: 29.07.2004 US 902473
(43) Date of publication of application: 27.09.2006
(73) Proprietor: Sony Computer Entertainment Inc., Tokyo 107-0062 (JP); International Business Machines Corporation, Armonk, NY 10504 (US)
(72) Inventor: KING, Matthew, Edward, Pflugerville, TX 78660 (US); LIU, Peichun, Peter, Austin, TX 78750 (US); MUI, David, Round Rock, TX 78681 (US); YAMAZAKI, Takeshi, Minato-ku Tokyo 107-0062 (JP)
(74) Representative: Richardt, Markus Albert
(86) International application number: PCT/IB2005/003353
(87) International publication number: WO 2006/011063

(56) References cited:
- EP-A- 1 209 573
- WO-A-03/023625
- US-A- 5 584 010
- US-A1- 2001 021 949

## Description

The present invention relates generally to the issuance of Direct Memory Access (DMA) request commands and, more particularly, to operation of command queues.

### DESCRIPTION OF THE RELATED ART

Over the past few years, DMA has become an important aspect of computer architecture. In addition to DMA, multiprocessor systems have been developed using DMA to provide ever faster processing capabilities. Specifically with DMA, there are typically two types of requests or commands that can be issued from a processor for the DMA Controller (DMAC) to execute: load and store. Depending on the system, though, an individual processor can have the ability to load or store from an Input/Output (I/O) Device, another processor's local memory, a memory device, and so forth.

More recently, though, the multiprocessors and DMACs have been incorporated onto a single chip. Reduction to a single chip allows for a reduced size as well as increased speed. The DMACs, the processors, Bus Interface Units (BIUs), and a bus can all be incorporated onto a chip. The dataflow of such a system starts from the processor core, which dispatches a DMA command and that command is stored in a DMA command queue. Each DMA command may be unrolled or broken into smaller bus requests to the BIU. The resulting unrolled request is stored in the BIU outstanding bus request queue. The BIU then forwards the request to the bus controller. Generally, the requests are sent out from the BIU in the order it was received from the DMA. When a bus request is completed, the BIU outstanding bus request queue entry is available to receive a new DMA request.

However, bottlenecks can result due to the physical sizes of the BIU outstanding bus request queue at the source device and the snoop queues at the destination device. The bottlenecks, typically, are a function of queue order and/or delays in executing commands. For example, command two to load from another processor's local memory can be delayed waiting for command one to store to the Dynamic Random Access Memory (DRAM). Hence, the resulting bottlenecks can cause dramatic losses in operational speed.

A contributor to the bottlenecks can be execution order of DMA commands. The fact is that certain commands are executed faster than others. For example, DMA command executions that move data between processors, on the same chip, can be completed faster than the DMA command executions to external Memory or I/O devices which typically take much longer. As a result, DMA commands for data movement to Memory or I/O Devices will stay in the BIU outstanding request queue much longer. Eventually the BIU outstanding request queue may become completely occupied with the slower bus requests leaving little or no room for additional bus requests from the DMA. This results in performance degradation of the processors since the processor has to stop to wait for available space in the BIU outstanding bus request queue.

Another contributor to the bottlenecks can be retries. In the case that multiple source devices are moving data to/from the same destination device, the destination device has to reject the bus request when the snoop queue is full which causes the source device to retry the same bus request at a later time.

Another contributor to the bottlenecks can be the order of execution of commands in the destination device. In a conventional DRAM access, the DRAM device can operate in parallel on consecutive memory banks. Moreover, bidirectional busses are typically utilized to interface with DRAM devices. If the data movement direction is changed frequently, bus bandwidth is reduced due to additional bus cycles required to turn around the bus. Also, it is desirable to do a series of reads or writes to the same memory page to obtain greater parallel DRAM access.

US2001/021949A1 shows a network interface device for coupling a host computer to a network. The network interface device includes a processor and a DMA controller. The processor causes the DMA controller to perform multiple DMA commands before the processor takes a particular software branch. The processor issues the DMA commands by placing the DMA commands in the memory and then pushing values indicative of the DMA commands onto a DMA command queue. The values are popped off the DMA command queue and are executed by the DMA controller one at a time. The DMA commands are always executed in the same order that they were issued by the processor.

Therefore, there is a need for a method and/or apparatus for improving the efficiency of a DMA issue mechanism that addresses the aforementioned problems.

### Summary of the invention

Various aspects of the present invention may address certain bottleneck problems associated with servicing DMA requests. The DMA controller receives a DMA command from a processing element and unrolls each request to the bus interface unit. Issue logic within the DMA controller determines which commands are allowed to go out and/or the timing of issuing the commands. A bus interface unit within the DMA controller has a queue, which holds the DMA requests before they are issued to the bus. Each DMA request can be targeted towards: an external memory, an I/O device, or an on-chip memory. Examples of on-chip memories include local store memory (local memory of a processing element), Memory Mapped IO (MMIO), or cache-to-cache transfers.

In one scenario, one or more attributes of a plurality of DMA requests in the DMA queue may cooperate to reduce the overall performance of the memory system. For example, one or more attributes may involve whether the DMA request is for a DMA read command or a DMA write command. Numerous DMA read operations or numerous DMA write operations in succession may reduce performance because each DMA command is divided into a plurality of memory accesses and then executed normally. Alternating read and write operations may address this problem.

In accordance with one or more embodiments of the invention, a "slot" concept may be employed to control the timing of issuing memory accesses in response to the DMA requests in the DMA queue. For example, assuming that a given memory access is permitted a given time slot (or interval) "T" (T = 0, 1, 2, 3, ...), the command issuance for read and write operations may be controlled such read memory access operations are issued during slots 2T, while write memory access operations are issued during slots 2T + 1. By way of example, some systems may experience reduced performance when continuous read or write operations are issued when processor-to-processor access is requested, or when processor-to-I/O access is requested. In such systems, continuous read or write operations for processor-to-memory access may not induce result in the reduced performance. By employing the slot concept only in the processor-to-processor or processor-to-I/O access context, however, the lost of the performance may be avoided.

The use of a streaming ID concept may also prove beneficial for maintaining high-speed memory access. The streaming ID approach may be employed to distinguish the target of the requested access, such as distinguishing between an access request to memory or an access request to an I/O device. To illustrate the performance problem that the streaming ID concept addresses, it is assumed that the access to the I/O device would require a much longer time than the access to the memory. It is further assumed that the number of memory access requests and the number of I/O access requests stored in the DMA queue are substantially equal. In this case, the access time to the memory may include redundant time (due to servicing the I/O access requests) that would not normally exist and, consequently, may be slower than expected. To address this problem, it is possible to assign respective quotas, one quota for memory access requests and one quota for I/O access requests. Thus, even if the I/O access requests are suspended (due to reaching the I/O access quota), the speed of servicing the memory access requests may be maintained, without any reduction in performance, because the memory access quota may not be reached.

The slot approach and the streaming ID approach may be employed individually or in combination. Thus, the issue policy may take into account at least one of the following factors: slot alternation, streaming ID groups and age of the DMA command. Those skilled in the art will recognize that the detailed description herein bellow is directed mainly to the combination of the slot and streaming ID approaches.

For example, in one embodiment of the present invention, a method and a computer program for executing commands in a DMAC is contemplated. A slot is first selected. Once the slot has been selected a determination is then made as to which groups in the selected slot are valid. If there are no valid groups, then another slot is selected. However, if there is at least one valid group, a round robin arbitration scheme is used to select a group. Within the selected group, the oldest pending DMA command is chosen and unrolled. The unrolled bus request is then dispatched to the BIU. After the unrolling, the DMA command parameters are updated and written back into the DMA command queue.

The invention is as defined by the independent claims 1,5,9 and 13.

### BRIEF DESCRIPTION OF THE DRAWINGS

For a more complete understanding of the present invention and the advantages thereof, reference is now made to the following descriptions taken in conjunction with the accompanying drawings, in which:
FIGURE 1 is a block diagram depicting a multiprocessor computer system utilizing DMAC;
FIGURE 2A is a block diagram depicting improved DMAC command queue;
FIGURE 2B is a block diagram depicting control registers for the improved DMAC command register; and
FIGURE 3 is a flow chart depicting the issuance of commands via DMAC issue mechanism.

### DETAILED DESCRIPTION

In the following discussion, numerous specific details are set forth to provide a thorough understanding of the present invention. However, those skilled in the art will appreciate that the present invention may be practiced without such specific details. n other instances, well-known elements have been illustrated in schematic or block diagram form in order not to obscure the present invention in unnecessary detail. Additionally, for the most part, details concerning network communications, electro-magnetic signaling techniques, and the like, have been omitted inasmuch as such details are not considered necessary to obtain a complete understanding of the present invention, and are considered to be within the understanding of persons of ordinary skill in the relevant art.

It is further noted that, unless indicated otherwise, all functions described herein may be performed in either hardware or software, or some combinations thereof. In a preferred embodiment, however, the functions are performed by a processor such as a computer or an electronic data processor in accordance with code such as computer program code, software, and/or integrated circuits that are coded to perform such functions, unless indicated otherwise.

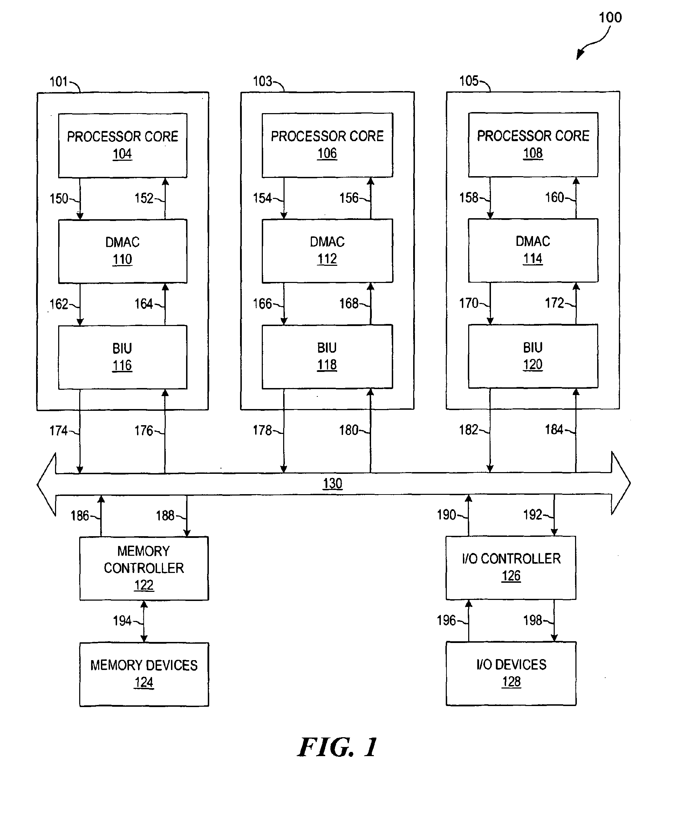

Referring to FIGURE 1 of the drawings, the reference numeral 100 generally designates a multiprocessor computer system utilizing DMAC. The system 100 comprises a first processor 101, a second processor 103, a third processor 105, a bus 130, a memory controller 122, memory devices 124, an I/O controller 126, and I/O devices 128. Additionally, there are a variety of types of storage or memory devices that can be utilized with the system 100. Also, there can be a single processor or multiple processors, as shown in FIG. 1.

Each of the processors 101, 103, and 105 are configured in a similar fashion to communicate data. The first processor 101, the second processor 103, and the third processor 105 each further comprise a first processor core 104, a second processor core 106, and a third processor core 108, respectively. The first processor core 104 is coupled to a first DMAC 110 through a first load communication channel 152 and a first store communication channel 150. The second processor core 106 is coupled to a second DMAC 112 through a second load communication channel 156 and a second store communication channel 154. The third processor core 108 is coupled to a third DMAC 114 through a third load communication channel 160 and a third store communication channel 158. The first DMAC 110 is coupled to the first BIU 116 through a fourth store communication channel 162 and a fourth load communication channel 164. The second DMAC 112 is coupled to the second BIU 118 through a fifth store communication channel 166 and a fifth load communication channel 168. The third DMAC 114 is coupled to the third BIU 120 through a sixth store communication channel 170 and a sixth load communication channel 172.

Each of the respective processors also operates in a similar fashion. A command, either a load or store command, originates in a processor core. There are a variety of commands that can be issued by a given processor. However, the focus, for the purposes of illustration, is three distinct command types: processor to processor, processor to memory devices, and processor to I/O devices. Once the command is issued by the processor core, the command is passed onto the DMAC. The DMAC then unrolls the command to the BIU, where a outstanding bus request queue stores the unrolled bus request. At a later time, the bus request is sent out to the bus. When the bus controller grants the request, the source and destination devices will perform data transfer to complete the bus request.

The multiprocessor computer system utilizing DMAC 100 operates by utilizing a bus 130 to communicate data and bus requests among the varying components. The first processor 101 is coupled to the bus 130 through a seventh store communication channel 174 and a seventh load communication channel 176. The second processor 103 is coupled to the bus 130 through an eighth store communication channel 178 and an eighth load communication channel 180. The third processor 105 is coupled to the bus 130 through a ninth store communication channel 182 and a ninth load communication channel 184. The memory controller 122 utilizes a bidirectional memory bus implementation to communicate data to and from the memory devices 124. Hence, the memory controller 122 is coupled to the bus 130 via a bidirectional memory bus implementation through a tenth store communication channel 186 and a tenth load communication channel 188. Also, the I/O Controller 126 is coupled to the bus 130 through an eleventh store communication channel 190 and an eleventh load communication channel 192.

In addition to connections to the bus 130, there can also be connections between varieties of other components. More particularly, controllers, such as the memory controller 122 and the I/O controller 126, require connections to other respective devices. The memory controller 122 is coupled to the memory devices 124 through a first bandwidth controlled communication channel 194. The I/O controller 126 is coupled to the I/O devices 128 through a second bandwidth controlled communication channel 196 and a third bandwidth controlled communication channel 198.

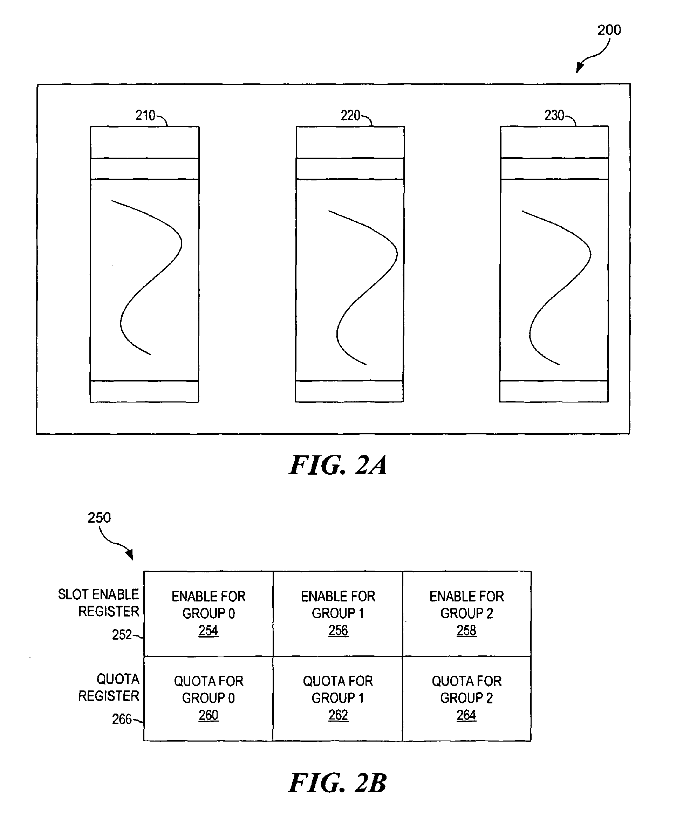

Referring to FIGURES 2A and 2B of the drawings, the reference numerals 200 and 250 generally designate the command queue and control registers in the DMAC, respectively. The DMA command queue 200 contains a fixed number of entries; each entry is subdivided into three fields: slot field 210, streaming ID field 220, and command field 230. The DMA control register 250 comprises a slot enable register 252 and a quota register 266.

Within the DMAC, such as the DMAC 110 of FIGURE 1, there are a finite number of queue entries for queuing commands in a physical queue. The incoming DMA command can be placed into any available command queue entry. Slot designations for each DMA command are entered into the slot field 210. Because the DMA command consists of the command opcode and operands, such as the streaming ID, the streaming ID is placed into the streaming ID field 220, and the command opcode and other operands are placed into the command field 230. Each streaming ID is configured to have the slot function either enabled or disabled in a single bit slot enable register 252, which is shown by the enable slots for group 0 254, group 1 256, and group 2 258. Moreover, there is a specific quota depicted by a quota for group 0 260, group 1 262, and group 2 264. The sum of the quotas is limited by the size of the BIU's outstanding bus request queue.

The enabling or disabling of the slot is used to match the bus bandwidth characteristics (i.e. if the bus is bidirectional such as a memory bus, the slot function is disabled). If the slot function is enabled for the streaming ID group, the load command will be assigned a value of zero in the slot field 210; the store command will be assigned a value of one in the slot field 210. If the slot function is disabled then both load and store commands will be assigned a value of zero in the slot field 210.

Typically, though, there are three bus request operations that can take place: processor to processor, processor to external or system memory, and processor to I/O devices. Each of the three operations can be assigned into streaming ID groups.

Generally, processor to processor commands are assigned to streaming ID group 0, processor to memory commands are assigned to streaming ID group 1, and processor to IO commands are assigned to streaming ID group 2. In this case, the slot function is enabled for streaming ID groups 0 and 2, and disabled for group 1 in order to match the bus bandwidth characteristics associated with the DMA command.

A DMA command is typically unrolled into one or more bus requests to the BIU. This bus request is queued in the BIU's outstanding DMA bus request queue, which has a limited size. By configuring the quota for each streaming ID group, this queue is divided into three virtual queues. Depending on the software application, the size of the three virtual queues can be dynamically configured via the streaming ID quotas.

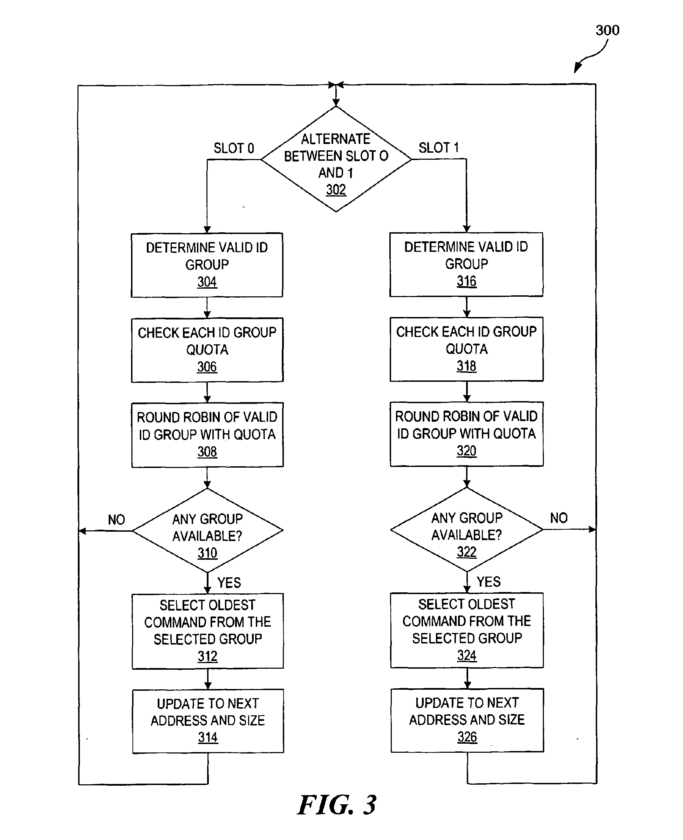

Referring to FIGURE 3 of the drawings, the reference numeral 300 generally designates a flow chart depicting the issuance of commands from modified DMAC issue mechanism.

Once the DMA commands have been entered into the command queue as shown in the flow chart 300 of FIGURE 3, the DMAC must then provide a process for issuing the commands, such as the process 300. In step 302, alternation between the slot 0 and the slot 1 occurs. The DMAC alternates between the slots in order to provide a more efficient usage of available bandwidth for unidirectional bus types.

If the Slot 0 is chosen to be executed next, then the DMAC should make a series of measurements to determine the issuing command queue. In step 304, the DMAC determines which group has valid pending DMA commands. Associated with each group is a maximum issue count or quota. The quota limits the number of bus request that can be issued to prevent the system overflow. To maintain a proper operation of the system, the DMAC determines whether each of the groups within the slot have exceeded their respective quotas in step 306.

Once a determination of validity and quotas has been made, the DMAC selects the next command. In step 308, the DMAC utilizes a round robin selection system between command groups. At the time of selection, a determination is made as to whether there are any valid groups under its respective quota limit with a pending command in step 310. If there are no valid groups under its respective quota limit with a pending command, then an alternation is made to the other slot, Slot 1. However, if there is a valid group under its respective quota with a pending command, then the oldest command from the group selected is unrolled in step 312. The round robin pointer is then adjusted to the next streaming ID command group and the size of the queue is reduced in step 314, and the slot is then alternated in step 302.

If the Slot 1 is chosen to be executed next, then the DMAC should make a series of measurements to determine the issuing command queue. In step 316, the DMAC determines which group has valid pending DMA commands. Associated with each group is a maximum issue count or quota. The quota limits the number of bus requests that can be issued to prevent the system overflow. To maintain a proper operation of the system, the DMAC determines whether each of the groups within the slot have exceeded their respective quotas in step 318.

Once a determination of validity and quotas has been made, the DMAC selects the next command. In step 320, the DMAC utilizes a round robin selection system between command groups. At the time of selection, a determination is made as to whether there are any valid groups under its respective quota limit with a pending command in step 322. If there are no valid groups under its respective quota limit with a pending command, then an alternation is made to the other slot, Slot 0. However, if there is a valid group under its respective quota with a pending command, then the oldest command from the group selected is unrolled in step 324. The round robin pointer is then adjusted to the next streaming ID command group and the size of the queue is reduced in step 326, and the slot is then alternated in step 302.

It should be noted that all Processor to Memory commands, be they load or store commands, are unrolled through Slot 0. The reason for issuing a number of commands in this manner is to improve efficiency. Changing direction of a bidirectional bus is time consuming. Moreover, with external memory, there is a plurality of banks that can each process requests individually, so the external memory is capable of receiving multiple commands. Also, the time required to process requests can be very long. Hence, it is advantageous to process as many requests to external memory as burst loads or stores to minimize changing the direction of the bidirectional bus and maximize the parallel load or parallel store.

It will further be understood from the foregoing description that various modifications and changes may be made in the preferred embodiment of the present invention without departing from its true spirit. This description is intended for purposes of illustration only and should not be construed in a limiting sense. The scope of this invention should be limited only by the language of the following claims.

Having thus described the present invention by reference to certain of its preferred embodiments, it is noted that the embodiments disclosed are illustrative rather than limiting in nature and that a wide range of variations, modifications, changes, and substitutions are contemplated in the foregoing disclosure and, in some instances, some features of the present invention may be employed without a corresponding use of the other features. Many such variations and modifications may be considered desirable by those skilled in the art based upon a review of the foregoing description of preferred embodiments. Accordingly, it is appropriate that the appended claims be construed broadly and in a manner consistent with the scope of the invention.

## Claims

1. A system for issuing Direct Memory Access (DMA) request commands originating from a processing element (101, 103, 105) employing a streaming ID to distinguish the target of the requested access, wherein bus request operations are assigned to one of a plurality of streaming ID groups, the system comprising:
a bus means (130);
a DMA Controller (DMAC; 110, 112, 114; 200, 250) means having issue logic means;
a Bus Interface Unit (BIU; 122, 124; 126, 128) means having an outstanding queue means, said BIU means being interconnected between said bus means and said DMAC means;
a bus target means interconnected to the bus means and including external memory, input-output (IO) means, and on-chip memory, wherein said bus means is interconnected between said BIU means and said bus target means;
the issue logic means determines which commands are permitted to unroll as bus requests as a function of an issue policy which factors slot alternation between read and write operations, a round-robin selection system between streaming Id groups, and age of said commands; and
the outstanding queue means holds each of the bus requests before issuance to the bus.

2. The apparatus of claim 1, wherein said DMAC means further comprises
a command code field (230) having a plurality of entry locations, the entry locations corresponding to command queue entries;
a slot field (210) that is at least configured to be associated with a command designation and that is at least configured to have a plurality of slot entries that each correspond to at least one entry location of the plurality.of entry locations; and
an identification field (220) that is at least configured to contain a streaming ID number corresponding to each entry location of the plurality of entry locations.

3. The apparatus of Claim 2, wherein the command designation further comprise a designation selected from the group consisting of a load command and a store command.

4. The apparatus of Claim 1, wherein said issue logic means at least disables slot alternation for an external device with a bidirectional bus.

5. A method for issuing commands in a DMAC using streaming ID groups to distinguish the target of the requested access, comprising:
selecting a time slot of a plurality of time slots to provide a selected time slot;
determining which command groups in the selected time slot are valid by determining whether a given memory access is permitted within the selected time slot;
if no command group is valid, then selecting another time slot of the plurality of time slots;
if at least one command group is valid, selecting oldest valid command; and
updating command group characteristics for a command group that possessed the oldest valid command.

6. The method of Claim 5, wherein the step of selecting a time slot further comprises selecting a load time slot or a store time slot.

7. The method of Claim 5, wherein the step of determining, further comprises:
determining a valid ID group of a plurality of ID groups, with a preprogrammed quota being associated with each ID group of the plurality of ID groups; and
determining if at least one valid ID group has reached the preprogrammed quota associated with that ID group.

8. The method of Claim 5, wherein the step of updating queue characteristics further comprises moving a pointer for the group that possessed the oldest valid command to a next pending bus request.

9. A computer program product for issuing commands in a DMAC using streaming ID groups to distinguish the target of the requested access, the computer program product having a medium with a computer executable code embodied thereon, the computer program comprising:
computer code for selecting a time slot of a plurality of time slots to provide a selected time slot;
computer code for determining which command groups in the selected time slot are valid by determining whether a given memory access is permitted within the selected time slot;
if no command group is valid, then computer code for selecting another slot of the plurality of slots;
if at least one command group is valid, computer code for selecting oldest valid command; and
computer code for updating command group characteristics for a command group that possessed the oldest valid command.

10. The computer program product of Claim 9, wherein the computer code for selecting a slot further comprises computer code for selecting a load time slot or a store time slot.

11. The computer program product of Claim 9, wherein the computer code for determining group validity, further comprises:
computer code for determining a valid ID group of a plurality of ID groups, with a preprogrammed quota being associated with each ID group of the plurality of ID groups; and
computer code for determining if at least one valid ID group has reached the preprogrammed quota associated with that ID group.

12. The computer program product of Claim 9, wherein the computer code for updating queue characteristics further comprises computer code for moving a pointer for the group that possessed the oldest valid command to a next pending bus request.

13. A processor for issuing commands in a DMAC, wherein a streaming ID is used to distinguish the target of a requested access, and bus request operations are assigned to one of a plurality of streaming ID groups, the processor including a computer program comprising:
computer code for selecting a time slot of a plurality of time slots to provide a selected time slot;
computer code for determining which groups in the selected time slot are valid by determining whether a given memory access is permitted within the selected time slot;
if no group is valid, then computer code for selecting another slot of the plurality of slots;
if at least one group is valid, computer code for selecting oldest valid command; and
computer code for updating group characteristics for a group that possessed the oldest valid command.

14. The processor of Claim 13, wherein the computer code for selecting a time slot further comprises computer code for selecting a load time slot or a store time slot.

15. The processor of Claim 13, wherein the computer code for determining group validity, further comprises:
computer code for determining a valid ID group of a plurality of ID groups, with a preprogrammed quota being associated with each ID group of the plurality of ID groups; and
computer code for determining if at least one valid ID group has reached the preprogrammed quota associated with that ID group.

16. The processor of Claim 13, wherein the computer code for updating queue characteristics further comprises computer code for moving a pointer for the group that possessed the oldest valid command to a next pending bus request.

## Patentansprüche

1. System zur Erteilung von Speicherzugriff (direct memory access, DMA), Anforderungsbefehlen, welche von einem Verarbeitungselement (101, 103, 105) stammen, welches eine kontinuierliche ID verwendet, um das Ziel des angeforderten Zugriffs zu unterscheiden, wobei Busanforderungsoperationen einer von einer Vielzahl von kontinuierlichen ID-Gruppen zugeordnet werden, wobei das System einschließt:
- Busmittel (130);
- DMA-Controller (DMAC; 110, 112, 114; 200, 250)-Mittel, welche Mittel zur Logikerteilung haben;
- ein Bus-Interface-Einheit (bus interface unit, BIU; 122, 124; 126, 128)-Mittel, welches ein ausstehendes Warteschlange-Mittel hat, wobei die besagten BIU-Mittel mit den besagten Busmitteln und den besagten DMAC-Mitteln verbunden sind;
- ein Bus-Zielmittel, welches mit den Busmitteln verbunden ist und ein externes Speicher-Eingabe-Ausgabe (IO)-Mittel und einen auf einem Chip befindlichen Speicher einschließt, wobei die besagten Busmittel zwischen mit den besagten BIU-Mitteln und den besagten Bus-Zielmitteln verbunden sind;
- wobei die Mittel zur Logikerteilung bestimmen, welchen Befehlen es erlaubt ist, Bus Anforderungen als Funktion einer Erteilungsrichtlinie auszugeben anhand der Faktoren Schlitz-Alternierung zwischen Lese- und Schreiboperationen, einem Ringselektionssystem zwischen kontinuierlichen ID-Gruppen, und dem Alter der besagten Kommandos; und
- wobei die ausstehenden Warteschlangen-Mittel jede der Busanforderungen vor Erteilung zu dem Bus halten.

2. Vorrichtung nach Anspruch 1, wobei die besagten DMAC-Mittel weiter einschließen:
- ein Befehls-Codefeld (230) welches einer Vielzahl von Eingabeplätzen aufweist, wobei die Eingabeplätze Befehls-Warteschlangeneinträgen entsprechen;
- ein Schlitzfeld (210), welches zumindest konfiguriert ist, um einer Befehlsbestimmung zugeordnet zu sein und welches zumindest konfiguriert ist, um eine Vielzahl von Schlitzeinträgen aufzuweisen welche zumindest einem Eingabeplatz der Vielzahl von Eingabeplätzen entsprechen; und
- ein Identifikationsfeld (220), welches zumindest konfiguriert ist, um eine kontinuierliche ID-Nummer zu enthalten, welche jedem Eingabeplatz der Vielzahl von Eingabeplätzen entspricht.

3. Vorrichtung nach Anspruch 2, wobei die Befehlsbestimmung des Weiteren eine Bestimmung umfasst, welche von der Gruppe ausgewählt ist, welche aus einem Ladekommando und einem Speicherkommando besteht.

4. Vorrichtung nach Anspruch 1, wobei die besagten Mittel zur Logikerteilung zumindest eine Schlitzalternierung für ein externes Gerät mit einem bidirektionalen Bus deaktivieren.

5. Verfahren zur Erteilung von Befehlen in einem DMAC unter Verwendung von kontinuierlichen ID-Gruppen zur Unterscheidung des Ziels des angeforderten Zugriffs, umfassend:
- Auswahl eines Zeitschlitzes aus einer Vielzahl von Zeitschlitzen, um einen ausgewählten Zeitschlitz zur Verfügung zu stellen;
- Bestimmung, welche Befehlsgruppen in dem ausgewählten Zeitschlitz gültig sind durch Bestimmung, ob ein gegebener Speicherzugriff in dem ausgewählten Zeitschlitz erlaubt ist;
- wenn keine Befehlsgruppe gültig ist, dann Auswahl eines weiteren Zeitschlitzes aus der Vielzahl von Zeitschlitzen;
- wenn zumindest eine Befehlsgruppe gültig ist, Auswahl des ältesten gültigen Befehls; und
- Aktualisierung der Befehlsgruppen-Charakteristik für eine Befehlsgruppe, welche den ältesten gültigen Befehl besaß.

6. Verfahren nach Anspruch 5, wobei der Schritt der Auswahl eines Zeitschlitzes weiter die Auswahl eines Ladezeitschlitzes oder eines Speicherzeitschlitzes umfasst.

7. Verfahren nach Anspruch 5, wobei der Schritt des Bestimmens weiter umfasst:
- Bestimmen einer gültigen ID-Gruppe aus einer Vielzahl von ID-Gruppen, mit einer vorprogrammierten Quote, welche jeder ID-Gruppe der Vielzahl von ID-Gruppen zugeordnet ist; und
- Bestimmung, ob zumindest eine gültige ID-Gruppe die vorprogrammierte Quote erreicht hat, welche dieser ID-Gruppe zugeordnet ist.

8. Verfahren nach Anspruch 5, wobei der Schritt des Aktualisierens der Warteschlangen-Charakteristik weiter das Bewegen eines Zeigers für die Gruppe, welche den ältesten gültigen Befehl besaß, zu einer nächsten anstehenden Busanforderung umfasst.

9. Computerprogrammprodukt zur Erteilung von Befehlen in einem DMAC unter Verwendung von kontinuierlichen ID-Gruppen zur Unterscheidung des Ziels des angeforderten Zugriffs, wobei das Computerprogrammprodukt ein Medium mit darin ausgebildeten computer-ausführbarem Code aufweist, wobei das Computerprogramm umfasst:
- Computercode zur Auswahl eines Zeitschlitzes einer Vielzahl von Zeitschlitzen zur Zurverfügungstellung eines ausgewählten Zeitschlitzes;
- Computercode zur Bestimmung, welche Befehlsgruppen in dem ausgewählten Zeitschlitz gültig sind durch Bestimmung, ob ein gegebener Speicherzugriff innerhalb des ausgewählten Zeitschlitzes erlaubt ist;
- wenn keine Befehlsgruppe gültig ist, dann Computercode zur Auswahl eines weiteren Schlitzes der Vielzahl von Schlitzen;
- wenn zumindest eine Befehlsgruppe gültig ist, Computercode zur Auswahl des ältesten gültigen Kommandos; und
- Computercode zur Aktualisierung von Befehlsgruppen-Charakteristika für eine Befehlsgruppe, welche das älteste gültige Kommando besaß.

10. Computerprogrammprodukt nach Anspruch 9, wobei der Computercode zur Auswahl eines Schlitzes weiter einen Computercode zur Auswahl eines Ladezeitschlitzes oder eines Speicherzeitschlitzes umfasst.

11. Computerprogrammprodukt nach Anspruch 9, wobei der Computercode zur Bestimmung einer Gruppengültigkeit weiter umfasst:
- Computercode zur Bestimmung einer gültigen ID-Gruppe einer Vielzahl von ID-Gruppen, mit einer vorprogrammierten Quote, welche jeder ID-Gruppe der Vielzahl von ID-Gruppen zugeordnet sind; und
- Computercode zur Bestimmung, ob zumindest eine gültige ID-Gruppe die vorprogrammierte Quote, welche der ID-Gruppe zugeordnet ist, erreicht hat.

12. Computerprogrammprodukt nach Anspruch 9, wobei der Computercode zur Aktualisierung der Warteschlangen-Charakteristik weiter Computercode zur Bewegung eines Zeigers von der Gruppe, welche das älteste gültige Kommando besaß, zu einer nächsten anstehenden Busanforderung umfasst.

13. Prozessor zur Erteilung von Befehlen in einem DMAC, wobei eine kontinuierliche ID zur Unterscheidung des Ziels eines angeforderten Zugriffs verwendet wird und wobei Busanforderungsoperationen zu einer aus einer Vielzahl von kontinuierlichen ID-Gruppen zugeordnet sind, wobei der Prozessor ein Computerprogramm einschließt, welches umfasst:
- Computercode zur Auswahl eines Zeitschlitzes aus einer Vielzahl von Zeitschlitzen zur Zurverfügungstellung eines ausgewählten Zeitschlitzes;
- Computercode zur Bestimmung, welche Gruppen in dem ausgewählten Zeitschlitz gültig sind durch Bestimmung, ob ein gegebener Speicherzugriff innerhalb des ausgewählten Zeitschlitzes erlaubt ist;
- wenn keine Gruppe gültig ist, dann Computercode zur Auswahl eines weiteren Schlitzes aus der Vielzahl von Schlitzen;
- wenn zumindest eine Gruppe gültig ist, Computercode zur Auswahl des ältesten gültigen Befehls; und
- Computercode zur Aktualisierung von Gruppencharakteristika für eine Gruppe, welche den ältesten gültigen Befehl besaß.

14. Prozessor nach Anspruch 13, wobei der Computercode zur Auswahl eines Zeitschlitzes weiter Computercode zur Auswahl eines Ladezeitschlitzes oder eines Speicherzeitschlitzes umfasst.

15. Prozess nach Anspruch 13, wobei der Computercode zur Bestimmung einer Gruppengültigkeit weiter umfasst:
- Computercode zur Bestimmung einer gültigen ID-Gruppe aus einer Vielzahl von ID-Gruppen, mit einer vorprogrammierten Quote, welcher jeder lD-Gruppe der Vielzahl von ID-Gruppen zugeordnet ist; und
- Computercode zur Bestimmung, ob zumindest eine gültige lD-Gruppe die vorprogrammierte Quote, welche dieser ID-Gruppe zugeordnet ist, erreicht hat.

16. Prozessor nach Anspruch 13, wobei der Computercode zur Aktualisierung der Warteschlangen-Charakteristik weiter einen Computercode zur Bewegung eines Zeigers von der Gruppe, welche das älteste gültige Kommando besaß zu einer nächsten anstehenden Busanforderung, umfasst.

## Revendications

1. Système pour émettre des instructions de demande d'accès direct à la mémoire (DMA) provenant d'un élément de traitement (101, 103, 105) en utilisant un ID en continu pour distinguer la cible de l'accès demandé, dans lequel des opérations de demande de bus sont attribuées à un groupe parmi une pluralité de groupes d'ID en continu, le système comportant :
des moyens de bus (130) ;
des moyens de contrôleur DMA (DMAC ; 110, 112, 114 ; 200, 250) ayant des moyens logiques d'émission ;
des moyens d'unité d'interface de bus (BIU ; 122, 124 ; 126, 128) ayant des moyens de file d'attente en instance, lesdits moyens BIU étant interconnectés entre lesdits moyens de bus et lesdits moyens DMAC ;
des moyens de cible de bus interconnectés aux moyens de bus et incluant une mémoire externe, des moyens d'entrée/sortie (IO), et une mémoire sur puce, lesdits moyens de bus étant interconnectés entre lesdits moyens BUI et lesdits moyens de cible de bus ;
les moyens logiques d'émission déterminent quelles instructions sont autorisées à se dérouler en tant que demandes de bus en fonction d'une politique d'émission qui établit une alternance de créneaux entre des opérations de lecture et d'écriture, un système de sélection à tour de rôle entre des groupes d'ID en continu, et l'ancienneté desdites instructions ; et
les moyens de file d'attente en instance conservent chacune des demandes de bus avant l'émission vers le bus.

2. Dispositif selon la revendication 1, dans lequel lesdits moyens DMAC comportent en outre
un champ de code d'instruction (230) ayant une pluralité d'emplacements d'entrée, les emplacements d'entrée correspondant à des entrées de file d'attente d'instructions ;
un champ de créneau (210) qui est au moins configuré pour être associé à une désignation d'instruction et qui est au moins configuré pour avoir une pluralité d'entrées de créneaux où chacun correspond à au moins un emplacement d'entrée de la pluralité d'emplacements d'entrée ; et
un champ d'identification (220) qui est au moins configuré pour contenir un numéro d'ID en continu correspondant à chaque emplacement d'entrée de la pluralité d'emplacements d'entrée.

3. Dispositif selon la revendication 2, dans lequel la désignation d'instruction comporte en outre une désignation sélectionnée à partir du groupe constitué d'une instruction de charge et d'une instruction de mémorisation.

4. Dispositif selon la revendication 1, dans lequel lesdits moyens logiques d'émission désactivent au moins une alternance de créneaux pour un dispositif externe avec un bus directionnel.

5. Procédé pour émettre des instructions dans un DMAC en utilisant des groupes d'ID en continu pour distinguer la cible de l'accès demandé comportant les étapes consistant à :
sélectionner un créneau de temps parmi une pluralité de créneaux de temps pour délivrer un créneau de temps sélectionné ;
déterminer quels groupes d'instructions dans le créneau de temps sélectionné sont valides en déterminant si un accès mémoire donné est autorisé dans le créneau de temps sélectionné ;
si aucun groupe d'instructions n'est valide, alors sélectionner un autre créneau de temps parmi la pluralité de créneaux de temps ;
si au moins un groupe d'instructions est valide, sélectionner l'instruction valide la plus ancienne ; et
mettre à jour des caractéristiques de groupe d'instructions pour un groupe d'instructions qui possède l'instruction valide la plus ancienne.

6. Procédé selon la revendication 5, dans lequel l'étape de sélection d'un créneau de temps comporte en outre la sélection d'un créneau de temps de charge ou d'un créneau de temps de mémorisation.

7. Procédé selon la revendication 5, dans lequel l'étape de détermination comporte en outre les étapes consistant à :
déterminer un groupe d'ID valide parmi une pluralité de groupes d'ID, un quota préprogrammé étant associé à chaque groupe d'ID parmi la pluralité de groupes d'ID ; et
déterminer si au moins un groupe d'ID valide a atteint le quota préprogrammé associé à ce groupe d'ID.

8. Procédé selon la revendication 5, dans lequel l'étape de mise à jour des caractéristiques de file d'attente comporte en outre le déplacement d'un pointeur pour le groupe qui possède l'instruction valide la plus ancienne à une demande de bus en suspens suivante.

9. Produit de programme informatique pour émettre des instructions dans un DMAC en utilisant des groupes d'ID en continu pour distinguer la cible de l'accès demandé, le produit de programme informatique ayant un support avec un code exécutable par ordinateur mis en oeuvre sur celui-ci, le programme informatique comportant :
un code informatique pour sélectionner un créneau de temps parmi une pluralité de créneaux de temps afin de délivrer un créneau de temps sélectionné,
un code informatique pour déterminer quels groupes d'instructions dans le créneau de temps sélectionné sont valides en déterminant si un accès mémoire donné est autorisé dans le créneau de temps sélectionné ;
si aucun groupe d'instructions n'est valide, alors un code informatique pour sélectionner un autre créneau de temps parmi la pluralité de créneaux de temps ;
si au moins un groupe d'instructions est valide, un code informatique pour sélectionner l'instruction valide la plus ancienne ; et
un code informatique pour mettre à jour des caractéristiques de groupe d'instructions pour un groupe d'instructions qui possède l'instruction valide la plus ancienne.

10. Produit de programme informatique selon la revendication 9, dans lequel le code informatique pour sélectionner un créneau de temps comporte en outre un code informatique pour sélectionner un créneau de temps de charge ou un créneau de temps de mémorisation.

11. Produit de programme informatique selon la revendication 9, dans lequel le code informatique pour déterminer une validité de groupe comporte en outre :
un code informatique pour déterminer un groupe d'ID valide parmi une pluralité de groupes d'ID, un quota préprogrammé étant associé à chaque groupe d'ID parmi la pluralité de groupes d'ID ; et
un code informatique pour déterminer si au moins un groupe d'ID valide a atteint le quota préprogrammé associé à ce groupe d'ID.

12. Produit de programme informatique selon la revendication 9, dans lequel le code informatique pour mettre à jour des caractéristiques de file d'attente comporte en outre un code informatique pour déplacer un pointeur pour le groupe qui possède l'instruction valide la plus ancienne à une demande de bus en suspens suivante.

13. Processeur pour émettre des instructions dans un DMAC, dans lequel un ID en continu est utilisé pour distinguer la cible d'un accès demandé, et des opérations de demande de bus sont attribuées à un groupe parmi une pluralité de groupes d'ID en continu, le processeur incluant un programme informatique comportant :
un code informatique pour sélectionner un créneau de temps parmi une pluralité de créneaux de temps afin de délivrer un créneau de temps sélectionné,
un code informatique pour déterminer quels groupes dans le créneau de temps sélectionné sont valides en déterminant si un accès mémoire donné est autorisé dans le créneau de temps sélectionné ;
si aucun groupe n'est valide, alors un code informatique pour sélectionner un autre créneau de temps parmi la pluralité de créneaux de temps ;
si au moins un groupe est valide, un code informatique pour sélectionner l'instruction valide la plus ancienne ; et
un code informatique pour mettre à jour des caractéristiques de groupe pour un groupe qui possède l'instruction valide la plus ancienne.

14. Processeur selon la revendication 13, dans lequel le code informatique pour sélectionner un créneau de temps comporte en outre un code informatique pour sélectionner un créneau de temps de charge ou un créneau de temps de mémorisation.

15. Processeur selon la revendication 13, dans lequel le code informatique pour déterminer une validité de groupe comporte en outre :
un code informatique pour déterminer un groupe d'ID valide parmi une pluralité de groupes d'ID, un quota préprogrammé étant associé à chaque groupe d'ID parmi la pluralité de groupes d'ID ; et
un code informatique pour déterminer si au moins un groupe d'ID valide a atteint le quota préprogrammé associé à ce groupe d'ID.

16. Processeur selon la revendication 13, dans lequel le code informatique pour mettre à jour des caractéristiques de file d'attente comporte en outre un code informatique pour déplacer un pointeur pour le groupe qui possède l'instruction valide la plus ancienne à une demande de bus en suspens suivante.
